# FASCICULE DE BREVET EUROPEEN

(11) **EP 1 069 397 B1**
(45) Date de publication et mention de la délivrance du brevet: **24.10.2012**
(21) Numéro de dépôt: 00402023.6
(22) Date de dépôt: 13.07.2000
(51) Int. Cl.: G01B 7/00, B64C 13/24, G01D 5/22, F15B 15/28

(54) **Capteur de déplacement pour verins de servo-commande**
Bewegungssensor für Schraubenwinde mit Servosteuerung
Displacement sensor for servo-controlled jacks

(30) Priorité: 16.07.1999 FR 9909241
(43) Date de publication de la demande: 17.01.2001
(73) Titulaire: TRW Systemes Aeronautiques Civils, 95310 St Ouen l'Aumone (FR)
(72) Inventeur: Vaslin, Jean-Philippe, 78150 Le Chesnay (FR); Roy, Alain, 95440 Ecouen (FR)
(74) Mandataire: Texier, Christian

(56) Documents cités:
- DE-A- 4 017 715
- DE-A1- 3 826 184
- US-A- 4 292 740
- US-A- 4 422 341
- US-A- 5 063 687
- US-A- 5 263 556
- US-A- 5 477 771
- US-A- 5 740 782
- PATENT ABSTRACTS OF JAPAN vol. 1998, no. 11, 30 septembre 1998 (1998-09-30) & JP 10 170209 A (TAMAGAWA SEIKI CO LTD), 26 juin 1998 (1998-06-26)

## Description

La présente invention est relative aux capteurs de déplacement pour vérin de servo-commande.

On utilise classiquement pour les vérins de servo-commande, et notamment dans le domaine de l'aéronautique pour les vérins de commande de vol, des capteurs différentiels linéaires (capteur de type "LVDT" ["*linear variable differential transducer*"] selon la terminologie d'origine anglo-saxonne couramment utilisée par l'homme du métier).

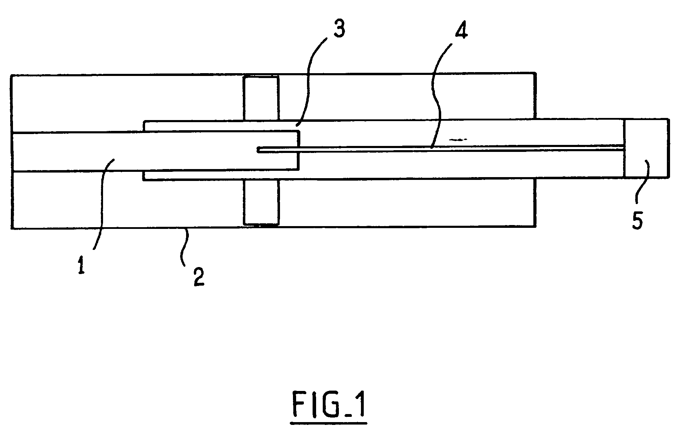

Un tel capteur de déplacement comporte habituellement, ainsi que l'illustre la figure 1, un corps 1 de capteur qui est fixé sur une extrémité de la chemise 2 du vérin et qui s'étend dans la longueur dudit vérin.

Un ou plusieurs bobinages sont disposés, de façon connue en soi, à l'intérieur de ce corps 1.

Une tige 4 formant noyau est montée coulissante dans le corps 1 et s'étend dans la tige 3, au delà dudit corps 1, en étant fixée sur un embout 5 qui termine ladite tige 3. Cet embout est généralement constitué par une chape sur laquelle est montée l'articulation du vérin.

Il est nécessaire de pouvoir régler un tel capteur de déplacement, notamment lors du montage du vérin par exemple sur un aéronef ou encore au cours du fonctionnement du vérin, pour tenir compte des dérives éventuelles du vérin ou du capteur.

A cet effet, on connaît déjà des structures dans lesquelles le noyau 4 du capteur est fixé sur l'embout 5 qui termine la tige 3 du vérin par coopération d'un filetage externe que le noyau 4 présente avec un filetage interne de l'embout 5.

Des moyens de réglage permettent d'entraîner en rotation le noyau 4 pour régler sa profondeur d'engagement dans l'embout. 5

Dans ces structures connues, ces moyens de réglage sont constitués par une molette qui engrène sur le filetage du noyau 4.

Pour cela, il est prévu dans la chape au niveau de l'embout 5 un évidement qui traverse ladite chape dans son épaisseur et dans lequel la molette est reçue.

Une telle structure présente plusieurs inconvénients.

Notamment, elle oblige à prévoir un évidement pour recevoir la molette dans une partie de la chape de liaison d'articulation qui termine l'embout, laquelle est mécaniquement fortement sollicitée.

Il en résulte une fragilisation de la chape d'articulation, qui oblige à dimensionner ladite chape en augmentant son encombrement.

Par ailleurs, les structures connues précitées ne permettent pas une très grande précision dans le réglage du capteur.

On connaît déjà par DE 3826184 une structure selon le préambule de la revendication 1. Cette structure ne permet pas de pallier ces inconvénients. D'autres structures sont commes de GB 1005520 et US 4182168 L'invention propose quant à elle une structure selon la revendication 1

L'invention est avantageusement complétée par les différentes caractéristiques suivantes prises seules ou selon toutes leurs combinaisons possibles :
- les moyens complémentaires avec lesquels le filetage de la vis de réglage coopère sont des cannelures s'étendant sur une portion du noyau ;
- la structure comporte une vis de blocage qui s'étend parallèlement à la vis de réglage et qui présente au voisinage de sa tête une clavette qui s'étend perpendiculairement à ladite vis de réglage et est destinée à s'engager dans une fente de la tête de ladite vis de réglage pour bloquer ladite vis dans une position donnée ;

- la vis de réglage présente une seule fente diamétrale ou une fente en croix ;
- le noyau présente une portée de guidage entre une portion filetée dont le filetage coopère avec le filetage de la chemise de l'embout et sa portion cannelée.

L'invention propose également un vérin de commande de vol d'aéronef, caractérisé en ce qu'il comporte une structure du type précité.

D'autres caractéristiques et avantages de l'invention ressortiront encore de la description qui suit. Cette description est purement illustrative et non limitative. Elle doit être lue en regard des dessins annexés sur lesquels :
- la figure 1, déjà analysée, est une représentation schématique en coupe d'un vérin comportant un capteur différentiel de déplacement linéaire ;
- la figure 2 est une représentation partielle en coupe d'un vérin comportant une structure conforme à un mode de réalisation possible de l'invention ;
- la figure 3 est une vue en coupe selon la ligne III-III de la figure 2.

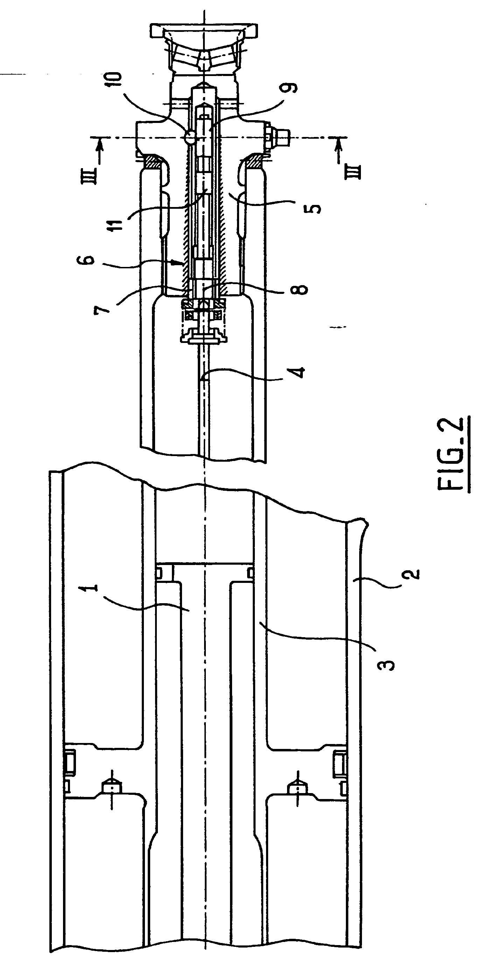

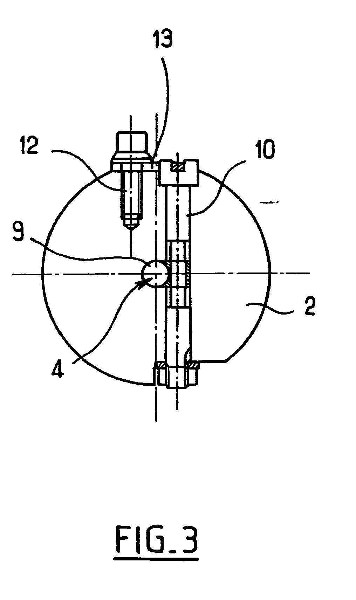

On a repris pour les éléments représentés sur la figure 1 qui se retrouvent sur les figures 2 et 3 les mêmes numérotations de référence.

On a en particulier représenté sur la figure 2 :
- le corps 1 d'un capteur de déplacement de type LVDT,
- le noyau 4 de celui-ci,
- le corps 2 et la tige 3 du vérin dans lesquels ce capteur est monté,
- l'embout 5 qui termine la tige 3.

Cet embout 5 présente en son intérieur une chemise 6 de forme générale cylindrique dans laquelle est reçue l'extrémité du noyau 4.

En sa partie la plus proche du corps 1, cette chemise 6 présente une portion 7 qui est filetée et dont le filetage engrène avec un filetage complémentaire que présente le noyau 4.

La portion du noyau 4 sur laquelle ce filetage complémentaire est ménagé a été référencée par 8 sur la figure 2.

Entre son extrémité et cette portion 8, le noyau 4 présente également une portion 9 sur laquelle est ménagée une succession de cannelures longitudinales.

Ces cannelures engrènent avec le filetage d'une vis de réglage 10.

Cette vis de réglage 10 est reçue dans un logement qui traverse la tige 2 tangentiellement au noyau 4 et perpendiculairement au plan de la chape de liaison d'articulation qui termine l'embout 5.

On notera que sur la figure 2, cette vis de réglage 10 est représentée ramenée dans la coupe.

Pour régler le capteur de déplacement, un opérateur tourne cette vis de réglage 10. Du fait de l'engrenage du filetage de la portion 7 de la chemise 6 avec le filetage de la portion 8 du noyau 4, la rotation de la vis de réglage 10 entraîne, par engrenage du filetage de ladite vis sur les cannelures de la portion 9, la rotation du noyau 4 et le déplacement axial de celui-ci dans la chemise 6.

Entre les portions filetées et cannelées 8 et 9, le noyau 4 présente également une portée cylindrique 11 qui a pour fonction de guider le noyau 4 dans son déplacement dans la chemise de drainage.

On notera que la structure qui vient d'être décrite permet, à résistance mécanique égale, un encombrement pour la chape de l'embout 5 beaucoup moins important qu'avec les structures connues dans l'état de la technique.

En outre, le fait que la vis de réglage 10 s'étende perpendiculairement au plan de la chape qui termine l'embout 5 et non parallèlement audit plan contribue également à ce que la présence de cette vis de réglage ne fragilise pas la liaison entre la tige et l'articulation qui est montée sur ladite chape.

Par ailleurs, ainsi que l'illustre la figure 3, il est prévu, à côté de cette vis de réglage 10, une vis de blocage 12 qui s'étend dans la tige 2, parallèlement à la vis de réglage 10, mais sur une longueur moins importante que ladite vis 10.

Cette vis de blocage 12 présente au voisinage de sa tête une clavette 13 qui s'étend perpendiculairement à ladite vis et est destinée à s'engager dans une fente de la tête de la vis de réglage 10 pour bloquer ladite vis 10 dans une position donnée.

Lorsque la tête de la vis de réglage 10 présente une seule fente diamétrale, le réglage ainsi réalisé est d'une précision correspondant à un demi-tour de vis 10.

Lorsque la tête de la vis de réglage 10 présente une fente en croix, le réglage réalisé est d'une précision qui correspond à un quart de tour de la vis de réglage 10.

On obtient ainsi un réglage particulièrement précis.

## Revendications

1. Structure comportant d'une part un capteur différentiel de déplacement linéaire qui comprend un corps (1) et un noyau (4) monté coulissant par rapport audit corps (1) et d'autre part une tige (3) de vérin de servocommande dans laquelle le noyau (4) est monté, ladite tige (3) se terminant par un embout (5) qui présente une chemise dans laquelle le noyau (4) est reçu au voisinage de son extrémité, cette chemise et le noyau (4) présentant des filetages complémentaires qui coopèrent pour maintenir ledit noyau (4) par rapport à ladite chemise, des moyens permettant de régler l'engagement du noyau (4) dans ladite chemise, **caractérisée en ce que** le vérin de servocommande étant un vérin de commande de vol d'aéronef, l'embout (5) de la tige (3) dudit vérin se termine par une chape d'articulation et **en ce que** les moyens de réglage de l'engagement du noyau (4) comportent une vis de réglage (10) qui s'étend à travers la tige (3) du vérin perpendiculairement au plan de la chape d'articulation et dont un filetage coopère avec des moyens complémentaires (9) portés par le noyau (4) pour qu'un mouvement de rotation imposé à la vis de réglage par un opérateur entraîne un déplacement axial du noyau (4) dans la chemise de l'embout (5).

2. Structure selon la revendication 1, **caractérisée en ce que** les moyens complémentaires avec lesquels le filetage de la vis de réglage (10) coopère sont des cannelures s'étendant sur une portion (9) du noyau (4).

3. Structure selon l'une des revendications précédentes, **caractérisée en ce qu'**elle comporte une vis de blocage qui s'étend parallèlement à la vis de réglage (10) et qui présente au voisinage de sa tête une clavette qui s'étend perpendiculairement à ladite vis de réglage (10) et est destinée à s'engager dans une fente de la tête de ladite vis de réglage (10) pour bloquer ladite vis dans une position donnée.

4. Structure selon la revendication 3, **caractérisée en ce que** la vis de réglage (10) présente une seule fente diamétrale.

5. Structure selon la revendication 3, **caractérisée en ce que** la vis de réglage (10) présente une fente en croix.

6. Structure selon l'une des revendications précédentes, **caractérisée en ce que** le noyau (4) présente une portée de guidage entre une portion filetée dont le filetage coopère avec le filetage de la chemise de l'embout (5) et sa portion cannelée.

7. Vérin de commande de vol d'aéronef, **caractérisé en ce qu'**il comporte une structure selon l'une des revendications précédentes.

## Claims

1. A structure comprising firstly a differential sensor of linear displacement comprising a body (1) and a core (4) slidably mounted relative to said body (1), and secondly a rod (3) of a servo-control actuator in which the core (4) is mounted, said rod (3) terminating in an endpiece (5) which has a bore in which the core (4) is received close to its end, said bore and the core (4) having complementary threads which co-operate to hold said core (4) relative to said bore, and means enabling the engagement of the core (4) in said bore to be adjusted, **characterized in that** the servo-control actuator is an aircraft flight control actuator, the endpiece (5) of the rod (3) of said actuator ends with a hinge lug and **in that** the means for adjusting the engagement of the core (4) comprise an adjustment screw (10) extending through the actuator rod (3) and whose thread co-operates with complementary means (9) carried by the core (4) so that turning movement applied to the adjustment screw by an operator gives rise to axial displacement of the core (4) in the bore of the endpiece (5).

2. A structure according to claim 1, **characterized in that** the complementary means with which the thread of the adjustment screw (10) co-operates is constituted by fluting extending a portion (9) of the core (4).

3. A structure according to any preceding claim, **characterized in that** it includes a locking screw which extends parallel to the adjustment screw (10) and which presents a projection in the vicinity of its head, the projection extending perpendicularly to said adjustment screw (10) and being designed to engage in a slot in the head of said adjustment screw (10) to lock said screw in a given position.

4. A structure according to claim 3, **characterized in that** the adjustment screw (10) has a single diametral slot.

5. A structure according to claim 3, **characterized in that** the adjustment screw (10) has a cross-shaped slot.

6. A structure according to any preceding claim, **characterized in that** the core (4) has a guiding bearing surface between a threaded portion whose thread co-operates with the thread of the bore of the endpiece (5) and the fluted portion thereof.

7. An aircraft flight control actuator, **characterized in that** it comprises a structure according to one of the previous claims.

## Patentansprüche

1. Struktur, beinhaltend einerseits einen differentiellen Linearverlagerungssensor, der einen Körper (1) und einen Kern (4) umfasst, der bezüglich des Körpers (1) verschiebbar angebracht ist, und andererseits einen Gewindestab (3) mit Servosteuerung, in dem der Kern (4) angebracht ist, wobei der Stab (3) in einem Ansatzstück (5) endet, das eine Einlage aufweist, in der der Kern (4) in Nähe seines Endes aufgenommen ist, wobei die Einlage und der Kern (4) komplementäre Gewinde aufweisen, die zusammenwirken, um den Kern (4) bezüglich der Einlage zu halten, wobei Mittel den Eingriff des Kerns (4) in der Einlage zu steuern erlauben, **dadurch gekennzeichnet, dass**, wobei das Gewinde mit Servosteuerung ein Steuergewinde eines Luftfahrzeugs ist, das Ansatzstück (5) des Gewindestabs (3) in einer gelenkigen Abdeckung endet und dadurch, dass die Steuermittel des Eingriffs des Kerns (4) eine Steuerschraube (10) beinhalten, die sich quer zum Gewindestab (3) rechtwinklig zur Ebene der gelenkigen Abdeckung erstreckt und von der ein Gewinde mit komplementären Mitteln (9) zusammenwirkt, die von dem Kern (4) getragen werden, damit eine Drehbewegung, die auf die Steuerschraube durch einen Anwender aufgebracht wird, eine axiale Verlagerung des Kerns (4) in der Einlage des Ansatzstücks (5) antreibt.

2. Struktur nach Anspruch 1, **dadurch gekennzeichnet, dass** die komplementären Mittel, mit denen das Gewinde der Steuerschraube (10) zusammenwirkt, Rillen sind, die sich über einen Teil (9) des Kerns (4) erstrecken.

3. Struktur nach einem der vorstehenden Ansprüche, **dadurch gekennzeichnet, dass** sie eine Blockierschraube umfasst, die sich parallel zur Steuerschraube (10) erstreckt, und die in Nähe ihres Kopfes einen Keil aufweist, der sich rechtwinklig zu der Steuerschraube (10) erstreckt und bestimmt ist, in einem Schlitz des Kopfes der Steuerschraube (10) in Eingriff zu stehen, um die Schraube in einer gegebenen Position zu blockieren.

4. Struktur nach Anspruch 3, **dadurch gekennzeichnet, dass** die Steuerschraube (10) einen einzelnen diametralen Schlitz aufweist.

5. Struktur nach Anspruch 3, **dadurch gekennzeichnet, dass** die Steuerschraube (10) einen Kreuzschlitz aufweist.

6. Struktur nach einem der vorstehenden Ansprüche, **dadurch gekennzeichnet, dass** der Kern (4) eine Führungslagerfläche zwischen einem Gewindeteil aufweist, dessen Gewinde mit dem Gewinde der Einlage des Ansatzstücks (5) und seinem gerillten Teil zusammenwirkt.

7. Steuerschraube eines Flugzeugs, **dadurch gekennzeichnet, dass** sie eine Struktur nach einem der vorstehenden Ansprüche umfasst.
